# EUROPEAN PATENT SPECIFICATION

(11) **EP 4 030 001 B1**
(45) Date of publication and mention of the grant of the patent: **03.06.2026**
(21) Application number: 20905427.9
(22) Date of filing: 02.12.2020
(51) Int. Cl.: E02F 9/20, E02F 9/26, G01G 19/10, E02F 3/43, G01G 19/08

(54) **WORK MACHINE, WEIGHING METHOD, AND SYSTEM INCLUDING WORK MACHINE**
ARBEITSMASCHINE, WÄGEVERFAHREN UND SYSTEM, DAS EINE ARBEITSMASCHINE EINSCHLIESST
MACHINE DE TRAVAIL, PROCÉDÉ DE PESAGE ET SYSTÈME COMPRENANT UNE MACHINE DE TRAVAIL

(30) Priority: 27.12.2019 JP 2019238195
(43) Date of publication of application: 20.07.2022
(73) Proprietor: Komatsu Ltd., Minato-ku Tokyo 107-8414 (JP)
(72) Inventor: YAMAWAKI, Shota, Tokyo 107-8414 (JP)
(74) Representative: Grünecker Patent- und Rechtsanwälte PartG mbB
(86) International application number: PCT/JP2020/044802
(87) International publication number: WO 2021/131546

(56) References cited:
- EP-A1- 2 556 737
- EP-A1- 3 677 882
- WO-A1-2019/039606
- WO-A1-2019/171885
- WO-A1-2019/171885
- WO-A1-2019/189935
- JP-A- 2000 204 603
- JP-A- 2001 099 701
- JP-A- 2001 099 701
- JP-A- 2009 236 752
- JP-A- 2019 039 207
- US-A1- 2020 041 331

## Description

The present disclosure relates to a work machine, a weighing method, and a system including the work machine.

PTL 1 (Japanese Patent Laying-Open No. 2001-99701) proposes a technique for measuring the weight of a load mounted on a load mount unit in a wheel loader. PTL 2 describes an hydraulic excavator comprising a load measurement start switch, wherein the load is measured, if the load measurement start switch is depressed by an operator.

### PATENT LITERATURE

PTL 1: Japanese Patent Laying-Open No. 2001-99701
PTL 2: WO 2019/039606 A1

In the above-mentioned literature, during the operation to raise a boom after excavation, the weight of the load mounted on the load mount unit is measured based on the boom angle and the pressure difference between the head pressure and the bottom pressure of a boom cylinder.

The boom cylinder pressure may not be stable during the operation to raise the boom. This may prevent accurate measurement of the weight of the load that is to be measured based on the boom cylinder pressure.

The present disclosure proposes a work machine, a weighing method, and a system including the work machine, by which a load in a bucket can be accurately weighed.
This is achieved by the features of the independent claims.

According to the present disclosure, the load in the bucket can be accurately weighed.
Fig. 1 is a side view of a wheel loader as an example of a work machine according to an embodiment.
Fig. 2 is a schematic block diagram showing a configuration of an entire system including the wheel loader according to the embodiment.
Fig. 3 is a diagram showing functional blocks in a first processor.
Fig. 4 is a graph showing an example of a relation between a boom angle and boom pressure for each load weight.
Fig. 5 is a graph showing a relation between the boom pressure and the load weight at a certain boom angle.
Fig. 6 is a schematic diagram showing an example of an excavation operation of the wheel loader.
Fig. 7 is a table showing a method of determining an excavation work of the wheel loader.
Fig. 8 is a flowchart illustrating a weighing method of weighing a load in a bucket according to an embodiment.
Fig. 9 is a flowchart illustrating a process flow for determining whether an automatic weighing start condition is satisfied or not.
Fig. 10 is a flowchart illustrating a process flow for performing automatic weighing.
Fig. 11 is a flowchart illustrating a process flow for determining whether a forced termination condition is satisfied or not.
Fig. 12 is a schematic diagram of a system including the wheel loader.

Embodiments will be hereinafter described with reference to the accompanying drawings. In the following description, the same components are denoted by the same reference characters. Their names and functions are also the same. Accordingly, the detailed description thereof will not be repeated.

### <Overall Configuration>

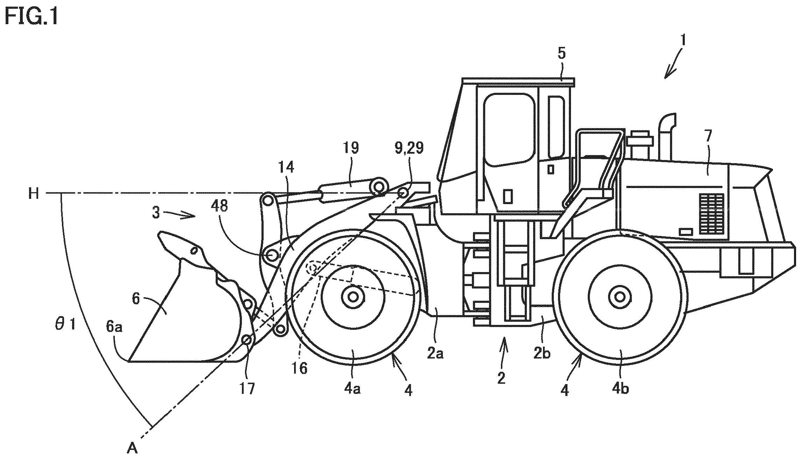

In an embodiment, a wheel loader 1 will be hereinafter described as an example of a work machine. Fig. 1 is a side view of wheel loader 1 as an example of the work machine according to the embodiment.

As shown in Fig. 1, wheel loader 1 includes a vehicular body frame 2, a work implement 3, a traveling unit 4, and a cab 5. Vehicular body frame 2, cab 5 and the like constitute a vehicular body (a work machine main body) of wheel loader 1. Work implement 3 and traveling unit 4 are attached to the vehicular body of wheel loader 1.

Traveling unit 4 causes the vehicular body of wheel loader 1 to travel and includes running wheels 4a and 4b. Wheel loader 1 is a wheeled vehicle including running wheels 4a and 4b as rotating bodies for traveling on both sides of the vehicular body in a left-right direction. Wheel loader 1 is movable as running wheels 4a and 4b are rotationally driven, and also, can perform a desired work using work implement 3.

In the present specification, the direction in which wheel loader 1 travels straightforward is referred to as a front-rear direction of wheel loader 1. In the front-rear direction of wheel loader 1, the side where work implement 3 is located with respect to vehicular body frame 2 is referred to as a frontward direction, and the side opposite to the frontward direction is referred to as a rearward direction. The left-right direction of wheel loader 1 is orthogonal to the front-rear direction in a plan view of wheel loader 1 situated on a flat ground. The right side and the left side in the left-right direction in facing forward are defined as a right direction and a left direction, respectively. A top-bottom direction of wheel loader 1 is orthogonal to a plane defined by the front-rear direction and the left-right direction. In the top-bottom direction, the ground side is defined as a lower side and the sky side is defined as an upper side.

Vehicular body frame 2 includes a front frame 2a and a rear frame 2b. Front frame 2a and rear frame 2b constitute vehicular body frame 2 having an articulated structure.

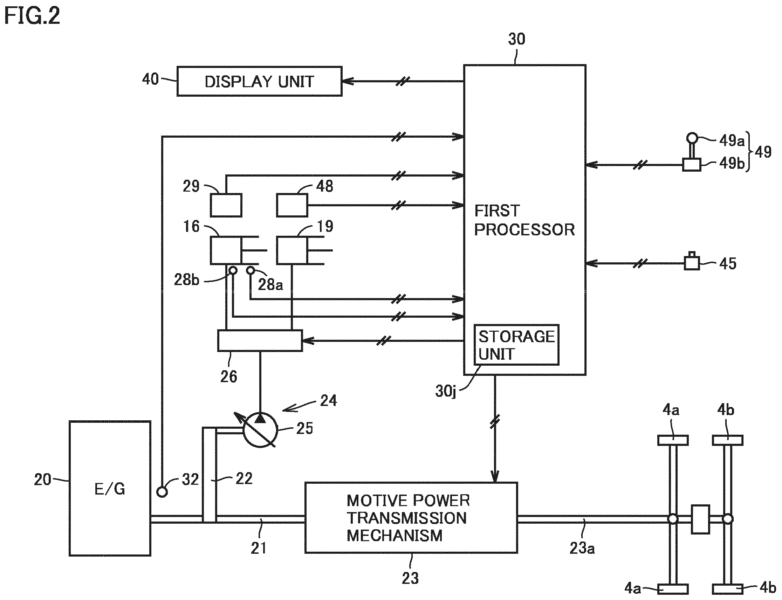

Work implement 3 and a pair of left and right running wheels (front wheels) 4a are attached to front frame 2a. Work implement 3 is disposed on the front side of the vehicular body and is supported by the vehicular body of wheel loader 1. Work implement 3 is driven by hydraulic oil from a work implement pump 25 (see Fig. 2). Work implement pump 25 is a hydraulic pump that is driven by an engine 20 to discharge hydraulic oil for operating work implement 3. Work implement 3 includes a boom 14 and a bucket 6 that serves as a work tool. Bucket 6 is disposed at the distal end of work implement 3.

A proximal end portion of boom 14 is attached by a boom pin 9 to front frame 2a so as to be rotatable. By a bucket pin 17 located at a distal end of boom 14, bucket 6 is attached to boom 14 so as to be rotatable.

Front frame 2a and boom 14 are coupled to each other by a pair of boom cylinders 16. Each boom cylinder 16 is a hydraulic cylinder. Each boom cylinder 16 has a proximal end attached to front frame 2a and a distal end attached to boom 14. As boom cylinder 16 extends and contracts by hydraulic oil from work implement pump 25 (see Fig. 2), boom 14 is raised and lowered. Boom cylinder 16 rotationally drives boom 14 to be raised and lowered about boom pin 9. As boom 14 is raised and lowered, bucket 6 attached to the distal end of boom 14 is also raised and lowered.

Work implement 3 further includes a bucket cylinder 19. Bucket cylinder 19 is a hydraulic cylinder and serves as a work tool cylinder that drives bucket 6 as a work tool. When bucket cylinder 19 extends and contracts by hydraulic oil from work implement pump 25 (see Fig. 2), bucket 6 pivots up and down. Bucket cylinder 19 drives bucket 6 to rotate about bucket pin 17.

Cab 5 and a pair of left and right running wheels (rear wheels) 4b are attached to rear frame 2b. Cab 5 is disposed behind boom 14. Cab 5 is placed on vehicular body frame 2. A seat on which an operator sits, an operation device 49 (described later), and the like are disposed inside cab 5.

Fig. 2 is a schematic block diagram showing a configuration of the entire system including wheel loader 1 according to an embodiment.

Wheel loader 1 includes engine 20, a motive power extraction unit 22, a motive power transmission mechanism 23, a cylinder driving unit 24, a first angle detector 29, a second angle detector 48, and a first processor 30 (a controller).

Engine 20 is a diesel engine, for example. Engine 20 is accommodated in the accommodation space covered by an engine hood 7 (Fig. 1). An output from engine 20 is controlled by adjusting the amount of fuel to be injected into a cylinder of engine 20. Engine 20 is provided with a rotation sensor 32. Rotation sensor 32 detects the rotation speed of the rotation shaft inside engine 20 and outputs a detection signal indicating the rotation speed to first processor 30.

Motive power extraction unit 22 is a device that distributes the output from engine 20 to motive power transmission mechanism 23 and cylinder driving unit 24. Motive power transmission mechanism 23 is a mechanism that transmits the driving force from engine 20 to front wheels 4a and rear wheels 4b, and serves as a transmission, for example. In wheel loader 1, both front wheels 4a attached to front frame 2a and rear wheels 4b attached to rear frame 2b constitute driving wheels that receive driving force to cause wheel loader 1 to travel. Motive power transmission mechanism 23 changes the speed of rotation of an input shaft 21 and outputs the resultant rotation to an output shaft 23a.

Cylinder driving unit 24 includes work implement pump 25 and a control valve 26. The output from engine 20 is transmitted to work implement pump 25 through motive power extraction unit 22. The hydraulic oil discharged from work implement pump 25 is supplied to boom cylinder 16 and bucket cylinder 19 through control valve 26.

First hydraulic pressure detectors 28a and 28b for detecting hydraulic pressure (cylinder pressure) in an oil chamber of boom cylinder 16 are attached to boom cylinder 16. Wheel loader 1 includes first hydraulic pressure detectors 28a and 28b. First hydraulic pressure detectors 28a and 28b correspond to the cylinder pressure sensing units of the embodiment that sense the cylinder pressure in boom cylinder 16. First hydraulic pressure detectors 28a and 28b include a pressure sensor 28a for detecting head pressure and a pressure sensor 28b for detecting bottom pressure, for example.

Pressure sensor 28a is attached to the head side of boom cylinder 16 (the side from which a piston rod of boom cylinder 16 protrudes). Pressure sensor 28a can detect the pressure (head pressure) of the hydraulic oil in the cylinder head-side oil chamber of boom cylinder 16. Pressure sensor 28a outputs a detection signal showing the head pressure in boom cylinder 16 to first processor 30.

Pressure sensor 28b is attached to the bottom side of boom cylinder 16 (the side from which the piston rod of boom cylinder 16 does not protrude). Pressure sensor 28b can detect the pressure (bottom pressure) of the hydraulic oil in the cylinder bottom-side oil chamber of boom cylinder 16. Pressure sensor 28b outputs a detection signal showing the bottom pressure in boom cylinder 16 to first processor 30.

First angle detector 29 is, for example, a potentiometer attached to boom pin 9. First angle detector 29 detects a boom angle showing a lift angle of boom 14. First angle detector 29 outputs a detection signal showing the boom angle to first processor 30.

Specifically, as shown in Fig. 1, a boom reference line A is a straight line passing through the center of boom pin 9 and the center of bucket pin 17. A boom angle θ1 is formed by a horizontal line H extending forward horizontally from the center of boom pin 9 and boom reference line A in the state where wheel loader 1 is placed on a horizontal ground. When boom reference line A extends along horizontal line H, boom angle θ1 = 0°. When boom reference line A extends above horizontal line H, boom angle θ1 is positive. When boom reference line A extends below horizontal line H, boom angle θ1 is negative.

First angle detector 29 may be a stroke sensor disposed in boom cylinder 16. First angle detector 29 corresponds to a boom angle sensing unit of the embodiment that senses boom angle θ1 indicating an angle of boom 14 with respect to the vehicular body of wheel loader 1.

Second angle detector 48 is a potentiometer, for example. Second angle detector 48 detects a bucket angle indicating an angle of bucket 6 with respect to boom 14. Second angle detector 48 outputs a detection signal indicating the bucket angle to first processor 30. Second angle detector 48 may be a proximity switch. Alternatively, second angle detector 48 may be a stroke sensor disposed on bucket cylinder 19.

As shown in Fig. 2, wheel loader 1 includes an operation device 49 inside cab 5. Operation device 49 includes: an operation member 49a operated by an operator; and a detection sensor 49b that detects the position of operation member 49a and outputs the detection result to first processor 30. Operation device 49 is operated by the operator to give instructions to: switch the movement of the vehicle between forward movement and rearward movement; set the target rotational speed of engine 20; control the deceleration force of wheel loader 1; operate boom 14 to be raised and lowered; control a speed change from input shaft 21 to output shaft 23a in motive power transmission mechanism 23; cause bucket 6 to perform a tilting operation and a dumping operation; angle (articulate) front frame 2a relative to rear frame 2b; and the like.

Wheel loader 1 includes a weighing start switch 45. Weighing start switch 45 is operated by an operator. Weighing start switch 45 is disposed, for example, inside cab 5. When weighing start switch 45 is operated by the operator, weighing start switch 45 outputs a signal indicating the details of the operation to first processor 30.

When first processor 30 is not performing the process of weighing the load in bucket 6, weighing start switch 45 is operated, and weighing start switch 45 outputs a signal to first processor 30 indicating that weighing start switch 45 has been operated. Thereby, first processor 30 recognizes that the operation to start the automatic weighing has been performed. While first processor 30 is performing the process of weighing the load in bucket 6, weighing start switch 45 is operated to output the signal to first processor 30 indicating that weighing start switch 45 has been operated. Thereby, first processor 30 recognizes that the operation to forcedly terminate the automatic weighing has been performed.

Weighing start switch 45 corresponds to an input receiving unit of the embodiment that receives a weighing start input for starting to weigh the load in bucket 6. Weighing start switch 45 may be any type of switch such as a push button switch, a toggle switch, or a rotary switch, for example. The input receiving unit is not limited to a switch but may have any configuration to which an operator can input an instruction to start weighing. For example, the input receiving unit may be configured of a touch panel.

First processor 30 is configured of a microcomputer including a storage device such as a random access memory (RAM) and a read only memory (ROM), and a computing device such as a central processing unit (CPU). First processor 30 may be implemented as a part of the function of the controller of wheel loader 1 that controls the operations of engine 20, work implement 3 (boom cylinder 16, bucket cylinder 19, and the like), motive power transmission mechanism 23, a display unit 40, and the like.

First processor 30 receives inputs including mainly: a signal of boom angle θ1 detected by first angle detector 29; a signal of the bucket angle detected by second angle detector 48; a signal of the head pressure of boom cylinder 16 detected by pressure sensor 28a; a signal of the bottom pressure of boom cylinder 16 detected by pressure sensor 28b; and a signal issued from weighing start switch 45 and indicating that weighing start switch 45 has been operated.

First processor 30 includes a storage unit 30j. Storage unit 30j stores a program for controlling various operations of wheel loader 1. First processor 30 performs various processes for controlling the operation of wheel loader 1 based on the program stored in storage unit 30j. Storage unit 30j is a non-volatile memory and provided as an area in which necessary data is stored.

Wheel loader 1 includes display unit 40. Display unit 40 is a monitor disposed in cab 5 and viewed by the operator. Display unit 40 shows information. Display unit 40 shows, for example, information related to the weight of the load in bucket 6 that is calculated by first processor 30.

### <Functional Blocks in First Processor 30>

First processor 30 shown in Fig. 2 has a function of calculating a boom pressure, i.e., a pressure difference between the head pressure detected by pressure sensor 28a and the bottom pressure detected by pressure sensor 28b. First processor 30 has a function of calculating the weight of the load in bucket 6 based on the boom pressure and boom angle θ1. The following describes the functional blocks in first processor 30 having the above-mentioned functions.

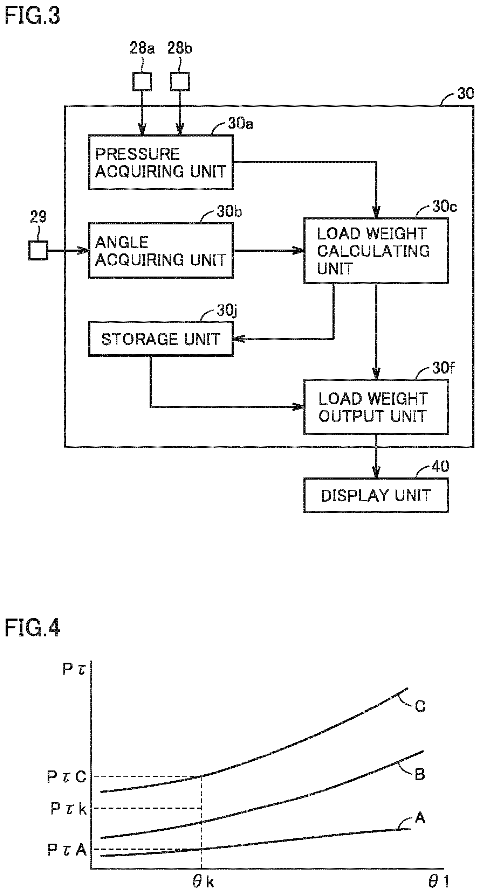

Fig. 3 is a diagram showing functional blocks in first processor 30. As shown in Fig. 3, first processor 30 mainly includes a pressure acquiring unit 30a, an angle acquiring unit 30b, a load weight calculating unit 30c, a load weight output unit 30f, and a storage unit 30j.

From pressure sensor 28a, pressure acquiring unit 30a receives an output of a detection signal indicating the head pressure of boom cylinder 16. From pressure sensor 28b, pressure acquiring unit 30a receives an output of a detection signal indicating the bottom pressure of boom cylinder 16. Pressure acquiring unit 30a calculates a pressure difference between the head pressure and the bottom pressure (the boom pressure) of boom cylinder 16. Pressure acquiring unit 30a outputs a signal of the calculated boom pressure to load weight calculating unit 30c.

From first angle detector 29, angle acquiring unit 30b receives an output of a detection signal indicating boom angle θ1. Angle acquiring unit 30b outputs a signal indicating the acquired boom angle θ1 to load weight calculating unit 30c.

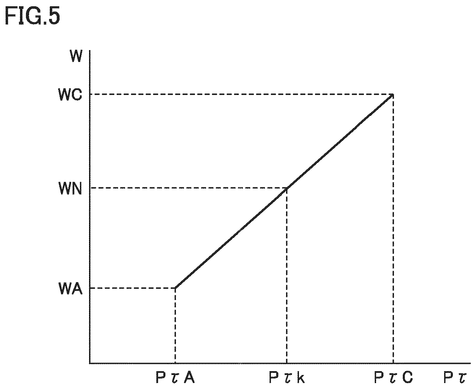

Load weight calculating unit 30c calculates the load weight in bucket 6 based on the signal indicating boom angle θ1 output from angle acquiring unit 30b and the signal indicating the boom pressure output from pressure acquiring unit 30a. The method of calculating the load weight in load weight calculating unit 30c will be described later in detail with reference to Figs. 4 and 5. The signal indicating the load weight in bucket 6 calculated in load weight calculating unit 30c is output to storage unit 30j and load weight output unit 30f.

Storage unit 30j stores the load weight output from load weight calculating unit 30c. Load weight output unit 30f outputs the load weight output from load weight calculating unit 30c or read from storage unit 30j to display unit 40. Display unit 40 causes a screen or the like to show the load weight.

### <Method of Calculating Load Weight>

The following describes an example of a method of calculating a load weight.

Fig. 4 is a graph showing an example of the relation between boom angle θ1 and a boom pressure Pτ for each load weight. In the graph in Fig. 4, the horizontal axis represents boom angle θ1 while the vertical axis represents boom pressure Pτ. In Fig. 4, a curve A shows the case where bucket 6 is empty, a curve B shows the case where bucket 6 is half full, and a curve C shows the case where bucket 6 is full. Based on the graph showing the relation between boom angle θ1 and boom pressure Pτ with respect to two or more load weights measured in advance, a graph showing the relation between the load weight and boom pressure Pτ for each boom angle θ1 can be obtained as shown in Fig. 4.

When boom angle θ1 and boom pressure Pτ at a certain time point are obtained, the load weight at that time point can be calculated. For example, assuming that boom angle θ1 = θk and boom pressure Pτ = Pτk at a certain time point mk as shown in Fig. 4, a load weight WN at that time point mk can be calculated from Fig. 5. Fig. 5 is a graph showing the relation between boom pressure Pτ and a load weight W at boom angle θ1 = θk. In the graph in Fig. 5, the horizontal axis represents boom pressure Pτ while the vertical axis represents load weight W.

As shown in Fig. 4, PτA represents boom pressure occurring when bucket 6 is empty at boom angle θ1 = θk. PτC represents boom pressure occurring when bucket 6 is full at boom angle θ1 = θk. WA shown in Fig. 5 represents a load weight occurring when bucket 6 is empty at boom angle θ1 = θk. Further, WC represents a load weight occurring when bucket 6 is full at boom angle θ1 = θk.

When Pτk is located between PτA and PτC as shown in Fig. 5, load weight WN at time point mk can be determined by performing linear interpolation. Alternatively, load weight WN can also be obtained based on the numerical table that stores the above-described relation in advance.

The method of calculating the load weight in bucket 6 is not limited to the examples shown in Figs. 4 and 5. In addition to or in place of the boom pressure and boom angle θ1, the pressure difference between the head pressure and the bottom pressure of bucket cylinder 19, the bucket angle, the dimensions of work implement 3, and the like can be taken into consideration as parameters for calculating the load weight in bucket 6. By calculating the load weight in bucket 6 in consideration of these parameters, the load weight can be more accurately calculated.

### <Excavation Operation>

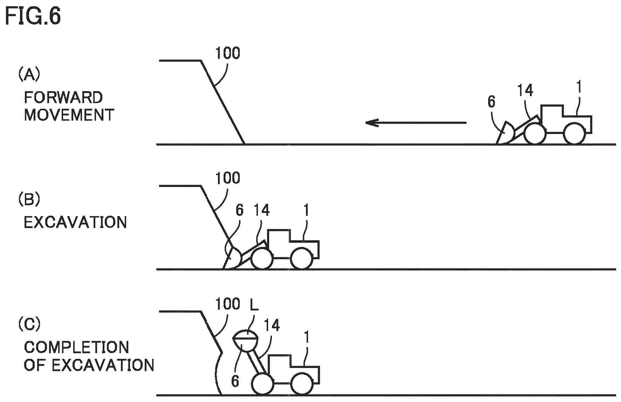

Wheel loader 1 of the embodiment performs: an excavation operation for scooping an excavation target 100 such as soil onto bucket 6; and a loading operation for loading a load L (excavation target 100) in bucket 6 onto a transportation machine such as a truck bed (an object onto which a load is loaded) of a dump truck. Wheel loader 1 repeatedly performs the excavation operation and the loading operation to excavate excavation target 100 and loads excavation target 100 onto a transportation machine such as a dump truck. Fig. 6 is a schematic diagram showing an example of the excavation operation of wheel loader 1 according to the embodiment.

As shown in Fig. 6(A), wheel loader 1 moves forward toward excavation target 100. In this forward movement step, the operator operates boom cylinder 16 and bucket cylinder 19 to cause work implement 3 to take an excavation attitude such that the tip of boom 14 is located at a low position and the bottom surface of bucket 6 faces horizontally. In this state, the operator causes wheel loader 1 to move forward toward excavation target 100.

As shown in Fig. 6(B), the operator causes wheel loader 1 to move forward until a cutting edge 6a (Fig. 1) of bucket 6 bites into excavation target 100. Then, the operator operates boom cylinder 16 to raise bucket 6, and operates bucket cylinder 19 to tilt back bucket 6. As a result of this excavation step, excavation target 100 is scooped into bucket 6. This leads to the state where bucket 6 having completed scooping is raised to the level equal to or higher than a prescribed height as shown in Fig. 6(C), for example, the state where bucket 6 is completely raised, and then, the excavation completes.

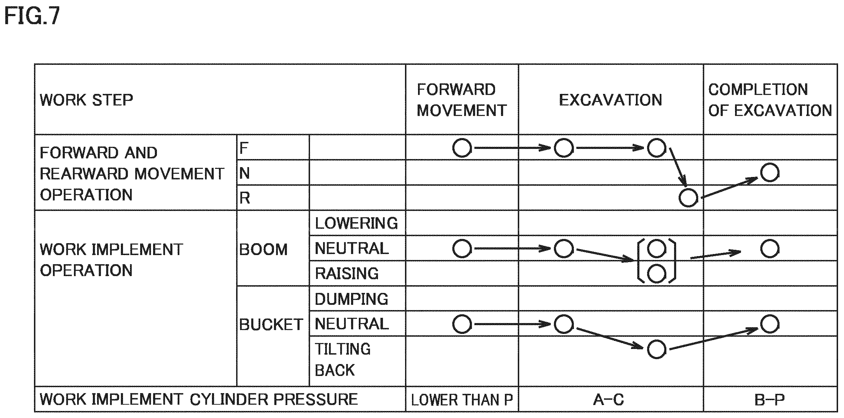

Fig. 7 is a table showing a method of determining an excavation work of wheel loader 1. In the table shown in Fig. 7, the uppermost line of "work step" shows the names of the work steps shown in Figs. 6(A) to 6(C).

The line of "forward and rearward movement operation" shows a determination condition about the operation performed by the operator to move wheel loader 1 forward or rearward, which is indicated by a circle mark.

The line of "work implement operation" shows a determination condition about the operation performed on work implement 3 by the operator, which is indicated by a circle mark. More specifically, the line of "boom" shows a determination condition about the operation performed on boom 14. Also, the line of "bucket" shows a determination condition about the operation performed on bucket 6.

The line of "work implement cylinder pressure" shows a determination condition about the current hydraulic pressure in a cylinder of work implement 3, e.g., the hydraulic pressure in a cylinder bottom chamber of boom cylinder 16. In this case, four reference values A, B, C, and P are set in advance for the hydraulic pressure. Based on these reference values A, B, C, and P, a plurality of pressure ranges (a range lower than reference value P, a range of reference values A to C, and a range of reference values B to P) are defined. These four reference values A, B, C, and P are defined in relation of A > B > C > P in descending order.

By using a combination of determination conditions about "forward and rearward movement operation", "boom", "bucket", and "work implement cylinder pressure" for each work step, first processor 30 can determine whether the step that is currently performed is an excavation work or not.

A specific operation of first processor 30 in performing control shown in Fig. 7 will be described below.

Combinations of the determination conditions about "forward and rearward movement operation", "boom", "bucket", and "work implement cylinder pressure" corresponding to the respective work steps shown in Fig. 7 are stored in advance in storage unit 30j (Figs. 2 and 3). First processor 30 recognizes the type (F, N or R) of the current operation for the forward and rearward movement of wheel loader 1 based on the signal from detection sensor 49b of operation device 49. First processor 30 recognizes the type (lowering, neutral or raising) of the current operation performed on boom 14 based on the signal from detection sensor 49b. First processor 30 recognizes the type (dumping, neutral or tilting back) of the current operation performed on bucket 6 based on the signal from detection sensor 49b. Further, first processor 30 recognizes the current hydraulic pressure in the cylinder bottom chamber of boom cylinder 16 based on the signal from pressure sensor 28b shown in Fig. 2.

First processor 30 compares the combination of the type of the current forward and rearward movement operation, the type of the current boom operation, the type of the current bucket operation, and the current lift cylinder hydraulic pressure that have been recognized (i.e., the current work state) with the previously stored combination of the determination conditions for "forward and rearward movement operation", "boom", "bucket", and "work implement cylinder pressure" corresponding to the respective work steps. As a result of this comparison process, first processor 30 determines whether the combination of the determination conditions best matching with the current work state is an excavation work or not.

In the excavation step shown in Fig. 6(B), the forward and rearward movement operation is set at F or R, the boom operation is set at neutral or raising, the bucket operation is set at neutral or tilting back, and the work implement cylinder pressure is in the range of reference values A to C. When the current work state meets the above-mentioned determination condition, it is an excavation step, and thus, first processor 30 determines that work implement 3 is performing an excavation work. When the current work state does not meet the above-mentioned determination condition, it is not an excavation step, and thus, first processor 30 determines that work implement 3 is not performing an excavation work.

### <Flow of Weighing Load L in Bucket 6>

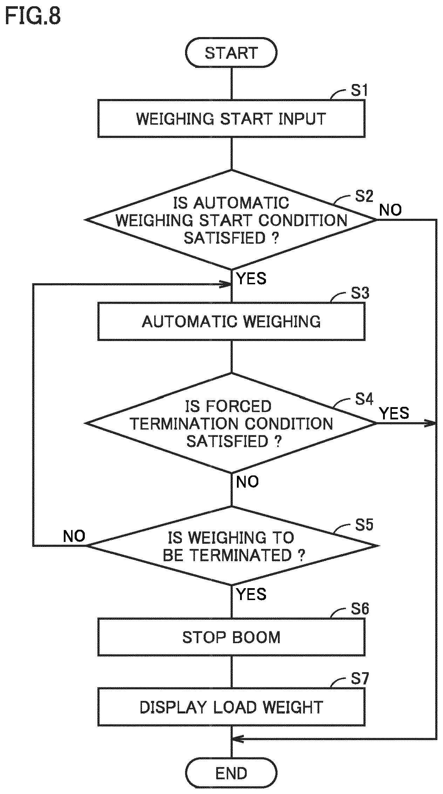

Wheel loader 1 in the present embodiment automatically weighs load L based on the operator's operation to measure the weight of load L mounted in bucket 6. Fig. 8 is a flowchart illustrating a weighing method of weighing a load in bucket 6 according to an embodiment.

As shown in Fig. 8, first, a weighing start input for starting to weigh a load in bucket 6 is received (step S1). When first processor 30 does not perform the process of weighing the load in bucket 6, the operator operates weighing start switch 45. A signal indicating that weighing start switch 45 has been operated is output from weighing start switch 45 to first processor 30. Upon receipt of this signal, first processor 30 recognizes that the operation to start automatic weighing has been performed.

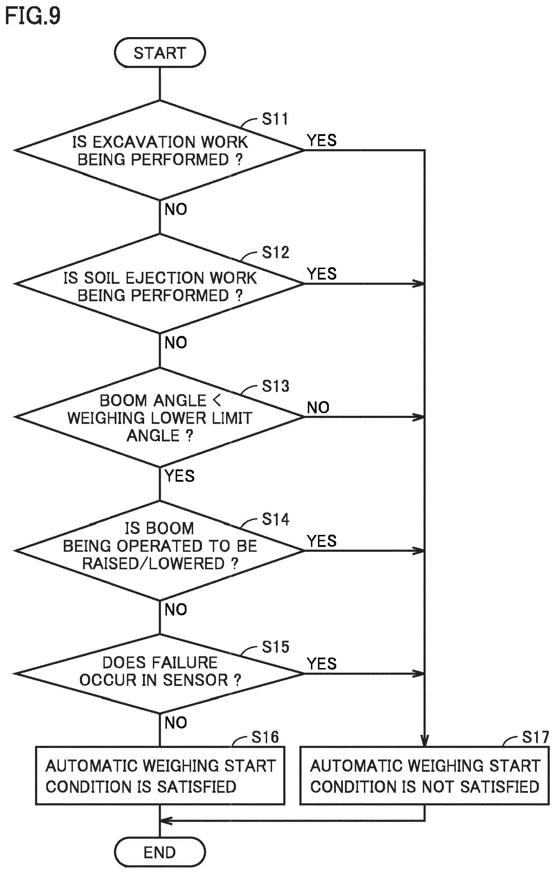

Then, it is determined whether an automatic weighing start condition is satisfied or not (step S2). Fig. 9 is a flowchart illustrating a process flow for determining whether the automatic weighing start condition is satisfied or not. Referring to Fig. 9, the following describes the determination as to whether the automatic weighing start condition is satisfied or not.

First, it is determined whether work implement 3 is performing an excavation work or not (step S11). The determination in step S11 is made using the determination in the work step as an example of the determination made during an excavation work. First processor 30 refers to the table shown in Fig. 7 to determine whether the current step is an excavation step (see also Fig. 6(B)) or another step based on the combination of the determination conditions of "forward and rearward movement operation", "boom", "bucket", and "work implement cylinder pressure".

When it is determined that the current step is not excavation and work implement 3 is not performing an excavation work (NO in step S11), then, it is determined whether or not work implement 3 is performing a soil ejection work (step S12). In the determination in step S12, based on the combination of the determination conditions of "forward and rearward movement operation", "boom", "bucket", and "work implement cylinder pressure", first processor 30 determines whether the current work step is a soil ejection step of mounting a load in bucket 6 onto a transportation machine such as a dump truck, or another step.

Since load L in bucket 6 decreases during the soil ejection work of work implement 3, the load weight in bucket 6 is not kept fixed. When the soil ejection work ends, bucket 6 no longer contains load L to be weighed. In order to accurately weigh load L in bucket 6, the automatic weighing start condition includes a condition that work implement 3 is not performing a soil ejection work.

When it is determined that the current step is not a soil ejection step and work implement 3 is not performing a soil ejection work (NO in step S12), then, it is determined whether or not boom angle θ1 is smaller than a weighing lower limit angle (step S13). First processor 30 sets, in advance, the range of boom angle θ1 suitable for weighing the load in bucket 6. First processor 30 sets the angle range so as to weigh the load in bucket 6 when boom angle θ1 falls within the prescribed angle range. This angle range may be input to first processor 30 by the operator and stored in storage unit 30j, or may be input to first processor 30 through communication from outside and stored in storage unit 30j.

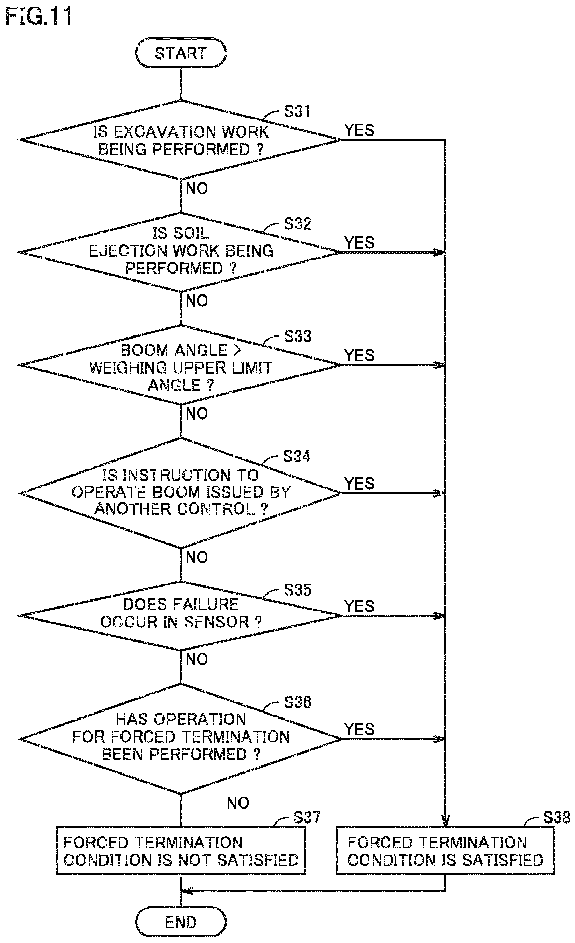

As to the angle range, for example, boom angle θ1 may range from -20° to +20°. In this case, the lower limit value of the angle range (the "weighing lower limit angle" in step S13) is -20°. The upper limit value of the angle range (the "weighing upper limit angle" in step S33 (Fig. 11) described later) is +20°.

First processor 30 compares boom angle θ1 input from first angle detector 29 with the weighing lower limit angle stored in storage unit 30j. Then, first processor 30 determines whether or not boom angle θ1 is smaller than the weighing lower limit angle.

When it is determined that boom angle θ1 is smaller than the weighing lower limit angle and the angle of boom 14 with respect to the vehicular body of wheel loader 1 falls out of the angle range suitable for weighing (YES in step S13), then, it is determined whether or not boom 14 is being operated to be raised/lowered (step S14). First processor 30 determines whether it receives a signal or not from detection sensor 49b of operation device 49 for indicating that operation member 49a is being operated to instruct an operation to raise or lower boom 14.

When a signal indicating an instruction to raise or lower boom 14 is not input from detection sensor 49b, and it is determined that boom 14 is not being operated to be raised or lowered (NO in step S14), then, it is determined whether or not a failure occurs in any of the sensors (step S15). The sensors for which it is determined in step S15 about existence of a failure specifically include first angle detector 29 for detecting boom angle θ1, second angle detector 48 for detecting the bucket angle, and pressure sensors 28a and 28b for sensing the cylinder pressure of boom cylinder 16. When first processor 30 does not receive signals from any of these sensors, or when any of the signals input from these sensors indicates an abnormal value falling out of the normal range, first processor 30 determines that a failure occurs in the corresponding sensor.

When it is determined that no failure occurs in each of the sensors (NO in step S15), the process proceeds to step S16, and then, it is set that the automatic weighing start condition is satisfied.

When it is determined in step S11 that work implement 3 is performing an excavation work (YES in step S11), when it is determined in step S12 that work implement 3 is performing a soil ejection work (YES in step S12), when it is determined in step S13 that boom angle θ1 is equal to or larger than the weighing lower limit angle (NO in step S13), when it is determined in step S14 that boom 14 is being operated to be raised or lowered (YES in step S14), or when it is determined in step S15 that a failure occurs in any of the sensors (YES in step S15), and then, the process proceeds to step S17, and it is set that the automatic weighing start condition is not satisfied.

Then, the process of determining whether the automatic weighing start condition is satisfied or not ends ("END" in Fig. 9).

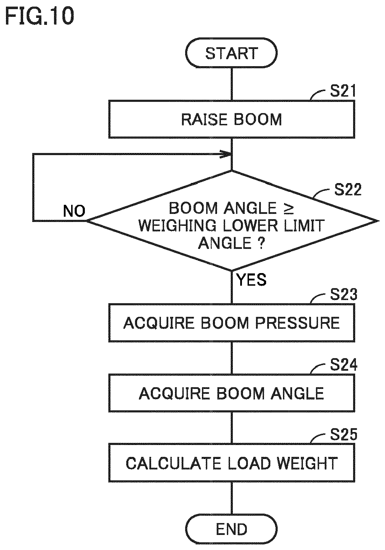

Referring back to Fig. 8, when it is determined in step S2 that the automatic weighing start condition is satisfied (YES in step S2), then, automatic weighing is performed (step S3). Fig. 10 is a flowchart illustrating a process flow for performing automatic weighing. Automatic weighing will be hereinafter described with reference to Fig. 10.

At the time when automatic weighing is started, boom angle θ1 is smaller than the weighing lower limit angle as determined in step S13, and work implement 3 is located at a position close to the ground. Thus, a process of raising boom 14 is first performed (step S21). First processor 30 outputs a control signal to control valve 26 to control the flow rate and the direction of the hydraulic oil supplied to boom cylinder 16, to thereby cause boom cylinder 16 to extend. Boom 14 rotates about boom pin 9, and boom 14 and bucket 6 attached to the distal end of boom 14 rise. As boom 14 rises, the absolute value of boom angle θ1 gradually decreases.

Then, it is determined whether or not boom angle θ1 is equal to or larger than the weighing lower limit angle (step S22). The determination in step S22 is repeated until boom angle θ1 becomes equal to or larger than the weighing lower limit angle. During this determination step, boom 14 continues to rise.

When it is determined that boom angle θ1 is equal to or larger than the weighing lower limit angle (YES in step S22), boom pressure Pτ is then acquired (step S23). From pressure sensor 28a, pressure acquiring unit 30a receives an output of a detection signal indicating the head pressure of boom cylinder 16. From pressure sensor 28b, pressure acquiring unit 30a receives an output of a detection signal indicating the bottom pressure of boom cylinder 16. Pressure acquiring unit 30a calculates a pressure difference between the head pressure and the bottom pressure (boom pressure Pτ) of boom cylinder 16. Pressure acquiring unit 30a outputs a signal of the calculated boom pressure Pτ to load weight calculating unit 30c.

Then, boom angle θ1 is acquired (step S24). From first angle detector 29, angle acquiring unit 30b receives an output of a detection signal indicating boom angle θ1. Angle acquiring unit 30b outputs a signal indicating the acquired boom angle θ1 to load weight calculating unit 30c.

Then, the load weight is calculated (step S25). Referring to Fig. 4, load weight calculating unit 30c calculates boom pressure Pτ at boom angle θ1 output from angle acquiring unit 30b in each of the cases where bucket 6 is empty, bucket 6 is full, and bucket 6 is half full. Referring to Fig. 5, by appropriate linear interpolation of: load weight WA occurring when bucket 6 is empty; load weight WC occurring when bucket 6 is full; and the load weight occurring when bucket 6 is half full, load weight calculating unit 30c calculates load weight W in bucket 6 that corresponds to boom pressure Pτ output from pressure acquiring unit 30a. Load weight calculating unit 30c outputs the calculated load weight W to storage unit 30j. Storage unit 30j stores the calculated load weight W.

In this way, a series of processes related to automatic weighing in step S3 ends ("END" in Fig. 10).

Referring back to Fig. 8, it is then determined whether the forced termination condition for automatic weighing is satisfied or not (step S4). Fig. 11 is a flowchart illustrating a process flow for determining whether the forced termination condition is satisfied or not. Referring to Fig. 11, the following describes the determination as to whether the forced termination condition is satisfied or not.

First, it is determined whether work implement 3 is performing an excavation work or not (step S31). In step S31, the same determination as that in step S11 (Fig. 9) is performed.

When it is determined that work implement 3 is not performing an excavation work (NO in step S31), it is then determined whether work implement 3 is performing a soil ejection work or not (step S32). In step S32, the same determination as that in step S12 (Fig. 9) is performed.

When it is determined that work implement 3 is not performing a soil ejection work (NO in step S32), it is then determined whether or not boom angle θ1 is larger than the weighing upper limit angle (step S33). First processor 30 compares boom angle θ1 input from first angle detector 29 with the weighing upper limit angle stored in storage unit 30j. Then, first processor 30 determines whether or not boom angle θ1 is larger than the weighing upper limit angle.

When it is determined that boom angle θ1 is not larger than the weighing upper limit angle, i.e., boom angle θ1 is equal to or smaller than the weighing upper limit angle (NO in step S33), then, it is determined whether an instruction to operate boom 14 is issued or not by another control (step S34). First processor 30 determines whether or not a control signal for changing the cylinder length of boom cylinder 16 so as to raise or lower boom 14 is output to control valve 26 by a process in another functional block not shown in Fig. 3.

In addition to the determination as to whether an instruction to raise or lower boom 14 is issued or not by the control process in first processor 30, it may also be determined whether or not boom 14 is operated to be raised/lowered by operation device 49 operated by the operator.

In addition, first processor 30 may determine whether a control signal for stopping boom 14 is output or not to control valve 26 by a process in another functional block not shown in Fig. 3. This is because the load is preferably weighed during the up-and-down movement of boom 14 in order to allow highly accurate weighing, and the weighing accuracy may not be able to be ensured in the state where boom 14 is stopped.

When it is determined that an instruction to operate boom 14 is not issued (NO in step S34), it is then determined whether a failure occurs or not in any of the sensors (step S35). In step S35, the same determination as that in step S15 (Fig. 9) is performed.

When it is determined that no failure occurs in any of the sensors (NO in step S35), it is then determined whether an operation to forcedly terminate the automatic weighing has been performed or not (step S36). When the operator operates weighing start switch 45 during execution of automatic weighing and a signal indicating that a switch operation has been performed is output from weighing start switch 45 to first processor 30, then, first processor 30 recognizes that the operation to forcedly terminate the automatic weighing has been performed.

Separately from weighing start switch 45, a forced termination switch operated by the operator may be provided inside cab 5. In this case, upon receipt of the signal indicating that the operator has operated the forced termination switch, first processor 30 may recognize that the operation to forcedly terminate the automatic weighing has been performed.

When it is determined that the operation to forcedly terminate the automatic weighing has not been performed (NO in step S36), the process proceeds to step S37, and then, it is set that the forced termination condition is not satisfied.

When it is determined in step S31 that work implement 3 is performing an excavation work (YES in step S31), when it is determined in step S32 that work implement 3 is performing a soil ejection work (YES in step S32), when it is determined in step S33 that boom angle θ1 is larger than the weighing upper limit angle (YES in step S33), when it is determined in step S34 that an instruction to raise or lower boom 14 has been issued (YES in step S34), when it is determined in step S35 that a failure occurs in any of the sensors (YES in step S35), or when it is determined that an operation to forcedly terminate the automatic weighing has been performed (YES in step S36), then, the process proceeds to step S38, and it is set that the forced termination condition is satisfied.

Then, the process of determining whether the forced termination condition is satisfied or not ends ("END" in Fig. 11).

Referring back to Fig. 8, when it is determined in step S4 that the forced termination condition is not satisfied (NO in step S4), the automatic weighing is not forcedly terminated but the automatic weighing is continued. In this case, it is then determined whether the condition for terminating the weighing is satisfied or not (step S5).

As shown in Fig. 8, when it is determined that the condition for terminating the weighing is not satisfied (NO in step S5), the automatic weighing process in step S3 and the determination about satisfaction of the forced termination condition in step S4 are repeated. When the process of calculating a load weight in step S25 (Fig. 10) is repeated a prescribed number of times, it can be determined based on this prescribed number of times of load weight calculation that the condition for terminating the weighing has been satisfied. The number of times of repetition of load weight calculation is stored in storage unit 30j in advance.

It is preferable that weighing of load L in bucket 6 can be completed in a short time period since the productivity of the excavating and loading operations by wheel loader 1 can be enhanced. When it is determined that a sufficiently accurate load weight could be acquired without having to conduct a prescribed number of times of load weight calculation, it may be determined that the condition for terminating the weighing has been satisfied based on the determination in step S5. For example, when the load weight obtained in the first calculation and the load weight obtained in the second calculation are equal to each other or are not strictly equal to each other but the difference therebetween is sufficiently small, then, it may be determined that a sufficiently accurate load weight could be acquired by two times of load weight calculations, and thereby may be determined that the condition for terminating the weighing has been satisfied. Alternatively, for example, the weight of load L may be fixed only by one load weight calculation, and then, it may be determined that the condition for terminating the weighing has been satisfied.

When it is determined in step S5 that the condition for terminating the weighing has been satisfied, weighing of the load in bucket 6 is terminated and the load weight in bucket 6 is fixed. For example, the average value of the results obtained by multiple calculations of the load weight and stored in storage unit 30j may be fixed as a load weight in bucket 6. Alternatively, for example, the load weight calculated in step S3 immediately before the determination made in step S5 that the condition for terminating the weighing has been satisfied may be fixed as a load weight in bucket 6.

Then, a process of stopping boom 14 is performed (step S6). First processor 30 outputs a control signal to control valve 26 to perform control to stop changes in flow rate and direction of the hydraulic oil supplied to boom cylinder 16, to thereby stop boom cylinder 16. This prevents boom 14 from rotating about boom pin 9, with the result that boom 14 and bucket 6 attached to the distal end of boom 14 stop.

Then, the process proceeds to step S7, and the load weight is displayed. Load weight output unit 30f outputs the fixed load weight in bucket 6 to display unit 40. Display unit 40 causes a screen or the like to show the load weight.

When it is determined in step S2 that the automatic weighing start condition is not satisfied (NO in step S2), i.e., when it is set in step S17 in Fig. 9 that the automatic weighing start condition is not satisfied, then, the automatic weighing is not performed and the process ends. When it is determined in step S4 that the forced termination condition is satisfied (YES in step S4), i.e., when it is set in step S38 in Fig. 11 that the forced termination condition is satisfied, then, the automatic weighing is forcedly terminated at the point of time.

In this way, a series of processes ends ("END" in Fig. 8) that is to measure the weight of load L mounted in bucket 6 and output (causing display unit 40 to show) the measured weight of load L.

### <Functions and Effects>

The following summarizes characteristic configurations, functions and effects about the work machine according to the above-described embodiment. Note that the constituent elements in the embodiment are denoted by reference characters, which are however provided merely by way of example.

As shown in Fig. 2, wheel loader 1 includes weighing start switch 45 and first processor 30 (a controller). Weighing start switch 45 receives a weighing start input for starting to weigh load L in bucket 6. As shown in Fig. 8, upon receipt of the weighing start input, first processor 30 determines whether an automatic weighing start condition is satisfied or not. As shown in Fig. 9, the automatic weighing start condition includes a condition that work implement 3 is not performing an excavation work. As shown in Figs. 8 and 10, when the automatic weighing start condition is satisfied, first processor 30 controls the operation of work implement 3, specifically, to raise boom 14 and weigh load L in bucket 6.

As shown in Figs. 4 and 5, the load weight in bucket 6 is calculated based on: the cylinder pressure detected by each of pressure sensors 28a and 28b and boom angle θ1 detected by first angle detector 29. During the excavation work of work implement 3, the cylinder pressure significantly fluctuates, which makes it difficult to accurately weigh load L in bucket 6. Thus, the automatic weighing start condition includes a condition that work implement 3 is not performing an excavation work. Thereby, the load can be weighed under the condition of the cylinder pressure with less fluctuations, so that load L in bucket 6 can be accurately weighed.

Weighing of the load in bucket 6 is performed while boom 14 is being raised in order to ensure the weighing accuracy. The operation to raise boom 14 is controlled not by the operator's operation but by first processor 30. Boom 14 operates along a prescribed operation pattern, which allows boom 14 to be operated in a fixed manner at each weighing. The reproducibility of the operation of boom 14 is enhanced to thereby reduce the unevenness in operation of boom 14 that is caused by the operator's manual operation. Since the uniformity of the transition of boom angle θ1 during weighing of load L in bucket 6 is improved, the weighing accuracy can be improved. The weighing accuracy can be further improved when the operation pattern in which first processor 30 raises boom 14, for example, the speed of raising boom 14, and the like, are set to be suitable for weighing.

As shown in Fig. 8, when the condition for terminating weighing of load L in bucket 6 has been satisfied, first processor 30 terminates weighing of load L in bucket 6 and fixes the load weight in bucket 6. In this case, upon satisfaction of the weighing termination condition, the weighing is immediately terminated and the load weight is fixed, to thereby avoid a situation that the weighing is still continued even after the weighing termination condition has been satisfied. Therefore, the time period required for weighing can be shortened.

As shown in Fig. 8, when the condition for terminating the weighing of load L in bucket 6 has been satisfied, first processor 30 stops the operation of work implement 3. When the load is weighed while boom 14 is being raised by the operator's manual operation, the operator who has recognized the termination of weighing performs an operation to stop boom 14. This causes a time lag between when weighing is terminated and when boom 14 is stopped, which lengthens the time period required for weighing. Since the operation to raise boom 14 during weighing is controlled by first processor 30, and the operation to stop boom 14 is also controlled by first processor 30, boom 14 can be stopped immediately after termination of weighing. Therefore, the time period required for weighing can be shortened.

As shown in Fig. 7, first processor 30 uses the cylinder pressure of boom cylinder 16 for determining that work implement 3 is not performing an excavation work. This allows an accurate determination whether or not work implement 3 is performing an excavation work. As shown in Fig. 7, for determining that work implement 3 is not performing an excavation work, first processor 30 can further use a detection signal that is output from detection sensor 49b of operation device 49 for detecting the forward and rearward movement operation of wheel loader 1 and the operation of work implement 3 (boom 14 and bucket 6). Thereby, first processor 30 can more accurately determine whether or not work implement 3 is performing an excavation work.

First processor 30 can use boom angle θ1 and the bucket angle for determining that work implement 3 is not performing an excavation work. Based on the attitude of work implement 3 detected in real time, first processor 30 can more accurately determine that work implement 3 is not performing an excavation work.

Further, first processor 30 can use the traction force of wheel loader 1 (traveling unit 4) for determining that work implement 3 is not performing an excavation work. By calculating the traction force to distinguish whether the output from engine 20 is used for forward traveling of wheel loader 1 or for holding load L in bucket 6, first processor 30 can more accurately determine that work implement 3 is not performing an excavation work. The traction force of wheel loader 1 can be calculated based on: the rotation speed of the rotation shaft of engine 20 detected by rotation sensor 32 (Fig. 2); the angle of a swash plate of work implement pump 25 (Fig. 2); the pressure discharged from work implement pump 25; the amount of accelerator operation detected by operation device 49; and the like.

As shown in Fig. 7, based on the determination about the work step of wheel loader 1, first processor 30 determines that work implement 3 is not performing an excavation work. By the determination based on the determination about the work step based on the current work state of wheel loader 1, first processor 30 can accurately determine that an excavation work is not being performed.

As shown in Fig. 9, the automatic weighing start condition includes a condition that boom angle θ1 falls out of a prescribed angle range suitable for weighing. In this case, boom 14 located at a position where boom angle θ1 falls out of the prescribed angle range is moved such that boom angle θ1 falls within the angle range. Then, when boom angle θ1 falls into the prescribed angle range as shown in Fig. 10, weighing of load L in bucket 6 is started, and thereby, load L in bucket 6 can be accurately weighed.

As shown in Fig. 9, the automatic weighing start condition includes a condition that boom 14 is not being operated to be raised or lowered. When the operator operates boom 14, intervention of the operation of boom 14 for automatic weighing is not allowed, but the operator's operation is prioritized. This prevents the operator from feeling uncomfortable due to the inability to operate boom 14 by the operator's manual operation.

As shown in Fig. 9, the automatic weighing start condition includes a condition that no failure occurs in each of first angle detector 29, second angle detector 48, and first hydraulic pressure detectors 28a and 28b. If a failure occurs in any of these sensors, the load weight in bucket 6 cannot be accurately calculated. Accordingly, the automatic weighing start condition includes a condition that no failure occurs in each of the sensors. Thereby, load L in bucket 6 can be accurately weighed.

By applying the above-mentioned weighing method to wheel loader 1 that includes vehicular body frame 2 and running wheels (front wheels 4a and rear wheels 4b) attached to vehicular body frame 2 and also includes work implement 3 disposed forward of vehicular body frame 2, load L in bucket 6 of wheel loader 1 can be accurately weighed.

In the above embodiment, an example has been described in which the operation of boom 14 to perform automatic weighing is an operation to raise boom 14. When performing the automatic weighing, boom 14 may be operated not only to be raised but also to be lowered. When the load is weighed during the operation to lower boom 14, it is determined in step S13 (Fig. 9) whether or not boom angle θ1 is larger than the weighing upper limit angle, it is determined in step S22 (Fig. 10) whether or not boom angle θ1 is equal to or smaller than the weighing upper limit angle, and it is determined in step S33 (Fig. 11) whether or not boom angle θ1 is smaller than the weighing lower limit angle. This can also achieve the effect of allowing accurate weighing of load L in bucket 6 when boom angle θ1 falls within the angle range suitable for weighing.

In the above embodiment, an example has been described in which boom 14 is automatically stopped when weighing of load L in bucket 6 ends, but the present invention is not limited thereto. First processor 30 may notify the operator that the weighing has ended, to thereby cause the operator to stop boom 14 by the manual operation.

In the above embodiment, an example has been described in which wheel loader 1 includes first processor 30, and first processor 30 mounted in wheel loader 1 performs control to weigh the load in bucket 6. The controller that performs control to weigh the load in bucket 6 does not necessarily have to be mounted on wheel loader 1.

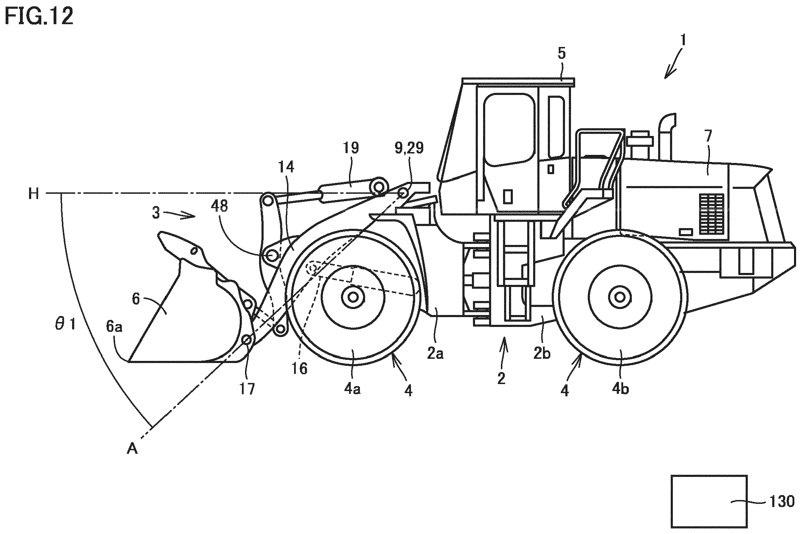

Fig. 12 is a schematic diagram of a system including wheel loader 1. An external controller 130 provided separately from first processor 30 mounted on wheel loader 1 may constitute a system for performing control to weigh the load in bucket 6. Controller 130 may be disposed at a work site of wheel loader 1 or at a remote location away from the work site of wheel loader 1.

In the above embodiment, an example has been described in which wheel loader 1 includes cab 5 and is a manned vehicle in which an operator is seated inside cab 5. Wheel loader 1 may be an unmanned vehicle. Wheel loader 1 may not include a cab in which an operator is seated to operate wheel loader 1. Wheel loader 1 may not have a steering function executed by an operator who is aboard wheel loader 1. Wheel loader 1 may be a work machine exclusively for remote control. Wheel loader 1 may be controlled by a wireless signal from a remote steering device.

It should be understood that the embodiments disclosed herein are illustrative and non-restrictive. The scope of the present invention is defined by the claims.

### REFERENCE SIGNS LIST

1 wheel loader, 2 vehicular body frame, 2a front frame, 2b rear frame, 3 work implement, 4 traveling unit, 4a front wheel, 4b rear wheel, 6 bucket, 14 boom, 16 boom cylinder, 19 bucket cylinder, 20 engine, 24 cylinder driving unit, 25 work implement pump, 26 control valve, 28a, 28b first hydraulic pressure detector, 29 first angle detector, 30 first processor, 30a pressure acquiring unit, 30b angle acquiring unit, 30c load weight calculating unit, 30f load weight output unit, 30j storage unit, 40 display unit, 45 weighing start switch, 48 second angle detector, 49 operation device, 100 excavation target, 130 controller, L load.

## Claims

1. A work machine comprising:
a work implement (3) including a bucket (6);
a controller (30); and
an input receiving unit (45) that receives a weighing start input for starting to weigh a load in the bucket (6); wherein
when the input receiving unit (45) receives the weighing start input, the controller (30) determines whether an automatic weighing start condition is satisfied or not, the automatic weighing start condition including a condition that the work implement (3) is not performing an excavation work, and when the automatic weighing start condition is satisfied, the controller (30) controls an operation of the work implement (3) to weigh the load in the bucket (6);
the work implement (3) includes a boom (14) that raises and lowers the bucket (6), and a boom cylinder (16) that drives the boom (14);
the work machine further comprises: a vehicular body (2, 5) to which the work implement (3) is attached; a boom angle sensing unit (29) that senses an angle of the boom (14) with respect to the vehicular body (2, 5); a bucket angle sensing unit (48) that senses an angle of the bucket (6) with respect to the boom (14); and a cylinder pressure sensing unit (28a, 28b) that senses cylinder pressure of the boom cylinder (16); and
the automatic weighing start condition includes a condition that no failure occurs in each of the boom angle sensing unit (29), the bucket angle sensing unit (48), and the cylinder pressure sensing unit (28a, 28b).

2. The work machine according to claim 1, wherein, when a condition for terminating weighing of the load in the bucket (6) is satisfied, the controller (30) terminates weighing of the load in the bucket (6) and fixes a load weight in the bucket (6).

3. The work machine according to claim 2, wherein, when the condition for terminating weighing of the load in the bucket (6) is satisfied, the controller (30) stops the operation of the work implement (3).

4. The work machine according to any one of claims 1 to 3, wherein
the controller (30) uses the cylinder pressure to determine that the work implement (3) is not performing the excavation work.

5. The work machine according to any one of claims 1 to 4, wherein, based on a determination about a work step of the work machine, the controller (30) determines that the work implement (3) is not performing the excavation work.

6. The work machine according to any one of claims 1 to 5, wherein
the controller (30) sets a prescribed angle range such that the controller (30) weighs the load in the bucket (6) when an angle of the boom (14) with respect to the vehicular body (2, 5) falls within the prescribed angle range; and
the automatic weighing start condition includes a condition that the angle of the boom (14) falls out of the prescribed angle range.

7. The work machine according to any one of claims 1 to 6, wherein
the automatic weighing start condition includes a condition that the boom (14) is not operated to be raised or lowered.

8. The work machine according to any one of claims 1 to 7, further comprising:
a vehicular body frame (2); and
a running wheel (4a, 4b) attached to the vehicular body frame (2); wherein
the work implement (3) is disposed forward of the vehicular body frame (2).

9. A weighing method for a work machine that includes: a work implement (3) including a bucket (6); and an input receiving unit (45) that receives a weighing start input for starting to weigh a load in the bucket (6), the weighing method being a method of weighing the load in the bucket (6), the weighing method comprising:
when the input receiving unit (45) receives the weighing start input, determining whether an automatic weighing start condition is satisfied or not, the automatic weighing start condition including a condition that the work implement (3) is not performing an excavation work; and
when the automatic weighing start condition is satisfied, controlling an operation of the work implement (3) to weigh the load in the bucket (6);
the work implement (3) includes a boom (14) that raises and lowers the bucket (6), and a boom cylinder (16) that drives the boom (14);
the work machine further comprises: a vehicular body (2, 5) to which the work implement (3) is attached; a boom angle sensing unit (29) that senses an angle of the boom (14) with respect to the vehicular body (2, 5); a bucket angle sensing unit (48) that senses an angle of the bucket (6) with respect to the boom (14); and a cylinder pressure sensing unit (28a, 28b) that senses cylinder pressure of the boom cylinder (16); and
the automatic weighing start condition includes a condition that no failure occurs in each of the boom angle sensing unit (29), the bucket angle sensing unit (48), and the cylinder pressure sensing unit (28a, 28b).

10. A system including a work machine, the system comprising:
the work machine including a work implement (3) including a bucket (6);
a controller (130) provided separately from the work machine; and
an input receiving unit (45) that receives a weighing start input for starting to weigh a load in the bucket (6); wherein
when the input receiving unit (45) receives the weighing start input, the controller (30) determines whether an automatic weighing start condition is satisfied or not, the automatic weighing start condition including a condition that the work implement (3) is not performing an excavation work, and when the automatic weighing start condition is satisfied, the controller (30) controls an operation of the work implement (3) to weigh the load in the bucket (6);
the work implement (3) includes a boom (14) that raises and lowers the bucket (6), and a boom cylinder (16) that drives the boom (14);
the work machine further comprises: a vehicular body (2, 5) to which the work implement (3) is attached; a boom angle sensing unit (29) that senses an angle of the boom (14) with respect to the vehicular body (2, 5); a bucket angle sensing unit (48) that senses an angle of the bucket (6) with respect to the boom (14); and a cylinder pressure sensing unit (28a, 28b) that senses cylinder pressure of the boom cylinder (16); and
the automatic weighing start condition includes a condition that no failure occurs in each of the boom angle sensing unit (29), the bucket angle sensing unit (48), and the cylinder pressure sensing unit (28a, 28b).

## Patentansprüche

1. Arbeitsmaschine, mit:
einem Arbeitsgerät (3) mit einer Schaufel (6);
einer Steuerung (30); und
einer Eingangsempfangseinheit (45), die eine Wiege-Start-Eingabe zum Starten des Wiegens einer Last in der Schaufel (6) empfängt; wobei
wenn die Eingangsempfangseinheit (45) die Wiege-Start-Eingabe empfängt, die Steuerung (30) bestimmt, ob eine Startbedingung für automatisches Wiegen erfüllt ist oder nicht, wobei die Startbedingung für automatisches Wiegen eine Bedingung beinhaltet, dass das Arbeitsgerät (3) keine Aushubarbeiten ausführt, und wenn die Startbedingung für automatisches Wiegen erfüllt ist, die Steuerung (30) einen Betrieb des Arbeitsgeräts (3) steuert, um die Last in der Schaufel (6) zu wiegen;
das Arbeitsgerät (3) einen Ausleger (14), der die Schaufel (6) anhebt und absenkt, sowie einen Auslegerzylinder (16), der den Ausleger (14) antreibt, aufweist;
die Arbeitsmaschine ferner aufweist: eine Fahrzeugkarosserie (2, 5), an der das Arbeitsgerät (3) angebracht ist; eine Auslegerwinkelerfassungseinheit (29), die einen Winkel des Auslegers (14) in Bezug auf die Fahrzeugkarosserie (2, 5) erfasst; eine Schaufelwinkelerfassungseinheit (48), die einen Winkel der Schaufel (6) relativ zu dem Ausleger (14) erfasst;
und eine Zylinderdruckerfassungseinheit (28a, 28b), die den Zylinderdruck des Auslegerzylinders (16) erfasst; und
die Startbedingung für automatisches Wiegen eine Bedingung beinhaltet, dass in der Auslegerwinkelerfassungseinheit (29), der Schaufelwinkelerfassungseinheit (48) und der Zylinderdruckerfassungseinheit (28a, 28b) jeweils kein Fehler auftritt.

2. Arbeitsmaschine nach Anspruch 1, wobei, wenn eine Bedingung zum Beenden des Wiegens der Last in der Schaufel (6) erfüllt ist, die Steuerung (30) das Wiegen der Last in der Schaufel (6) beendet und ein Lastgewicht in der Schaufel (6) festlegt.

3. Arbeitsmaschine nach Anspruch 2, wobei die Steuerung (30) den Betrieb des Arbeitsgeräts (3) stoppt, wenn die Bedingung zum Beenden des Wiegens der Last in der Schaufel (6) erfüllt ist.

4. Arbeitsmaschine nach einem der Ansprüche 1 bis 3, wobei
die Steuerung (30) den Zylinderdruck verwendet, um zu bestimmen, dass das Arbeitsgerät (3) keine Aushubarbeiten ausführt.

5. Arbeitsmaschine nach einem der Ansprüche 1 bis 4, wobei die Steuerung (30) auf der Grundlage einer Bestimmung bezüglich eines Arbeitsschritts der Arbeitsmaschine bestimmt, dass das Arbeitsgerät (3) keine Aushubarbeiten ausführt.

6. Arbeitsmaschine nach einem der Ansprüche 1 bis 5, wobei
die Steuerung (30) einen vorgegebenen Winkelbereich festlegt, derart, dass die Steuerung (30) die Last in der Schaufel (6) wiegt, wenn ein Winkel des Auslegers (14) in Bezug auf die Fahrzeugkarosserie (2, 5) innerhalb des vorgegebenen Winkelbereichs liegt; und
die Startbedingung für automatisches Wiegen eine Bedingung beinhaltet, dass der Winkel des Auslegers (14) außerhalb des vorgegebenen Winkelbereichs liegt.

7. Arbeitsmaschine nach einem der Ansprüche 1 bis 6, wobei
die Startbedingung für automatisches Wiegen eine Bedingung beinhaltet, dass der Ausleger (14) nicht zum Anheben oder Absenken betätigt wird.

8. Arbeitsmaschine nach einem der Ansprüche 1 bis 7, ferner mit:
einem Fahrzeugkarosserierahmen (2); und
einem Laufrad (4a, 4b), das an dem Fahrzeugkarosserierahmen (2) angebracht ist; wobei
das Arbeitsgerät (3) vor dem Fahrzeugkarosserierahmen (2) angeordnet ist.

9. Wiegeverfahren für eine Arbeitsmaschine, die aufweist: ein Arbeitsgerät (3) mit einer Schaufel (6); und eine Eingangsempfangseinheit (45), die eine Wiege-Start-Eingabe zum Starten des Wiegens einer Last in der Schaufel (6) empfängt, wobei das Wiegeverfahren ein Verfahren zum Wiegen der Last in der Schaufel (6) ist, wobei das Wiegeverfahren umfasst:
wenn die Eingangsempfangseinheit (45) die Wiege-Start-Eingabe empfängt, Bestimmen, ob eine Startbedingung für automatisches Wiegen erfüllt ist oder nicht, wobei die Startbedingung für automatisches Wiegen eine Bedingung beinhaltet, dass das Arbeitsgerät (3) keine Aushubarbeiten ausführt; und
wenn die Startbedingung für automatisches Wiegen erfüllt ist, Steuern eines Betriebs des Arbeitsgeräts (3), um die Last in der Schaufel (6) zu wiegen;
wobei das Arbeitsgerät (3) einen Ausleger (14), der die Schaufel (6) anhebt und absenkt, sowie einen Auslegerzylinder (16), der den Ausleger (14) antreibt, aufweist;
wobei die Arbeitsmaschine ferner aufweist: eine Fahrzeugkarosserie (2, 5), an der das Arbeitsgerät (3) angebracht ist; eine Auslegerwinkelerfassungseinheit (29), die einen Winkel des Auslegers (14) in Bezug auf die Fahrzeugkarosserie (2, 5) erfasst; eine Schaufelwinkelerfassungseinheit (48), die einen Winkel der Schaufel (6) relativ zu dem Ausleger (14) erfasst; und eine Zylinderdruckerfassungseinheit (28a, 28b), die den Zylinderdruck des Auslegerzylinders (16) erfasst; und
die Startbedingung für automatisches Wiegen eine Bedingung beinhaltet, dass in der Auslegerwinkelerfassungseinheit (29), der Schaufelwinkelerfassungseinheit (48) und der Zylinderdruckerfassungseinheit (28a, 28b) jeweils kein Fehler auftritt.

10. System mit einer Arbeitsmaschine, wobei das System aufweist:
die Arbeitsmaschine mit einem Arbeitsgerät (3), das eine Schaufel (6) aufweist;
eine von der Arbeitsmaschine getrennt vorgesehene Steuerung (130); und
eine Eingangsempfangseinheit (45), die eine Wiege-Start-Eingabe zum Starten des Wiegens einer Last in der Schaufel (6) empfängt; wobei
wenn die Eingangsempfangseinheit (45) die Wiege-Start-Eingabe empfängt, die Steuerung (30) bestimmt, ob eine Startbedingung für automatisches Wiegen erfüllt ist oder nicht, wobei die Startbedingung für automatisches Wiegen eine Bedingung beinhaltet, dass das Arbeitsgerät (3) keine Aushubarbeiten ausführt, und wenn die Startbedingung für automatisches Wiegen erfüllt ist, die Steuerung (30) einen Betrieb des Arbeitsgeräts (3) steuert, um die Last in der Schaufel (6) zu wiegen;
wobei das Arbeitsgerät (3) einen Ausleger (14), der die Schaufel (6) anhebt und absenkt, und einen Auslegerzylinder (16) aufweist, der den Ausleger (14) antreibt;
wobei die Arbeitsmaschine ferner aufweist: eine Fahrzeugkarosserie (2, 5), an der das Arbeitsgerät (3) angebracht ist; eine Auslegerwinkelerfassungseinheit (29), die einen Winkel des Auslegers (14) in Bezug auf die Fahrzeugkarosserie (2, 5) erfasst; eine Schaufelwinkelerfassungseinheit (48), die einen Winkel der Schaufel (6) in Bezug auf den Ausleger (14) erfasst; sowie eine Zylinderdruckerfassungseinheit (28a, 28b), die den Zylinderdruck des Auslegerzylinders (16) erfasst; und
wobei die Startbedingung für automatisches Wiegen eine Bedingung beinhaltet, dass in der Auslegerwinkelerfassungseinheit (29), der Schaufelwinkelerfassungseinheit (48) und der Zylinderdruckerfassungseinheit (28a, 28b) jeweils kein Fehler auftritt.

## Revendications

1. Machine de travail comprenant :
un outil de travail (3) comportant un godet (6) ;
un dispositif de commande (30) ; et
une unité de réception d'entrée (45) qui reçoit une entrée de démarrage de pesage pour démarrer le pesage d'une charge dans le godet (6) ; dans laquelle
lorsque l'unité de réception d'entrée (45) reçoit l'entrée de démarrage de pesage, le dispositif de commande (30) détermine si une condition de démarrage de pesage automatique est satisfaite ou non, la condition de démarrage de pesage automatique comportant une condition selon laquelle l'outil de travail (3) n'effectue pas un travail d'excavation, et, lorsque la condition de démarrage de pesage automatique est satisfaite, le dispositif de commande (30) commande un fonctionnement de l'outil de travail (3) pour peser la charge dans le godet (6) ;
l'outil de travail (3) comporte une flèche (14) qui soulève et abaisse le godet (6), et un vérin de flèche (16) qui entraîne la flèche (14) ;
la machine de travail comprend en outre : un corps de véhicule (2, 5) auquel l'outil de travail (3) est fixé ; une unité de détection d'angle de flèche (29) qui détecte un angle de la flèche (14) par rapport au corps de véhicule (2, 5) ; une unité de détection d'angle de godet (48) qui détecte un angle du godet (6) par rapport à la flèche (14) ; et une unité de détection de pression de vérin (28a, 28b) qui détecte une pression de vérin du vérin de flèche (16) ; et
la condition de démarrage de pesage automatique comporte une condition selon laquelle aucune défaillance ne se produit dans chacune de l'unité de détection d'angle de flèche (29), de l'unité de détection d'angle de godet (48) et de l'unité de détection de pression de vérin (28a, 28b).

2. Machine de travail selon la revendication 1, dans laquelle, lorsqu'une condition de fin de pesage de la charge dans le godet (6) est satisfaite, le dispositif de commande (30) met fin au pesage de la charge dans le godet (6) et fixe un poids de charge dans le godet (6).

3. Machine de travail selon la revendication 2, dans laquelle, lorsque la condition de fin de pesage de la charge dans le godet (6) est satisfaite, le dispositif de commande (30) arrête le fonctionnement de l'outil de travail (3).

4. Machine de travail selon l'une quelconque des revendications 1 à 3, dans laquelle le dispositif de commande (30) utilise la pression de vérin pour déterminer que l'outil de travail (3) n'effectue pas le travail d'excavation.

5. Machine de travail selon l'une quelconque des revendications 1 à 4, dans laquelle, sur la base d'une détermination relative à une étape de travail de la machine de travail, le dispositif de commande (30) détermine que l'outil de travail (3) n'effectue pas le travail d'excavation.

6. Machine de travail selon l'une quelconque des revendications 1 à 5, dans laquelle le dispositif de commande (30) établit une plage d'angle prescrite de sorte que le dispositif de commande (30) pèse la charge dans le godet (6) lorsqu'un angle de la flèche (14) par rapport au corps de véhicule (2, 5) se situe dans la plage d'angle prescrite ; et
la condition de démarrage de pesage automatique comporte une condition selon laquelle l'angle de la flèche (14) se situe hors de la plage d'angle prescrite.

7. Machine de travail selon l'une quelconque des revendications 1 à 6, dans laquelle la condition de démarrage de pesage automatique comporte une condition selon laquelle la flèche (14) n'est pas actionnée pour être soulevée ou abaissée.

8. Machine de travail selon l'une quelconque des revendications 1 à 7, comprenant en outre :
un châssis de corps de véhicule (2) ; et
une roue de roulement (4a, 4b) fixée au châssis de corps de véhicule (2) ; dans laquelle
l'outil de travail (3) est disposé à l'avant du châssis de corps de véhicule (2).

9. Procédé de pesage pour une machine de travail qui comporte : un outil de travail (3) comportant un godet (6) ; et une unité de réception d'entrée (45) qui reçoit une entrée de démarrage de pesage pour démarrer le pesage d'une charge dans le godet (6), le procédé de pesage étant un procédé de pesage de la charge dans le godet (6), le procédé de pesage comprenant les étapes consistant à :
lorsque l'unité de réception d'entrée (45) reçoit l'entrée de démarrage de pesage, déterminer si une condition de démarrage de pesage automatique est satisfaite ou non, la condition de démarrage de pesage automatique comportant une condition selon laquelle l'outil de travail (3) n'effectue pas un travail d'excavation ; et
lorsque la condition de démarrage de pesage automatique est satisfaite, commander un fonctionnement de l'outil de travail (3) pour peser la charge dans le godet (6) ;
l'outil de travail (3) comporte une flèche (14) qui soulève et abaisse le godet (6), et un vérin de flèche (16) qui entraîne la flèche (14) ;
la machine de travail comprend en outre : un corps de véhicule (2, 5) auquel l'outil de travail (3) est fixé ; une unité de détection d'angle de flèche (29) qui détecte un angle de la flèche (14) par rapport au corps de véhicule (2, 5) ; une unité de détection d'angle de godet (48) qui détecte un angle du godet (6) par rapport à la flèche (14) ; et une unité de détection de pression de vérin (28a, 28b) qui détecte une pression de vérin du vérin de flèche (16) ; et
la condition de démarrage de pesage automatique comporte une condition selon laquelle aucune défaillance ne se produit dans chacune de l'unité de détection d'angle de flèche (29), de l'unité de détection d'angle de godet (48) et de l'unité de détection de pression de vérin (28a, 28b).

10. Système comportant une machine de travail, le système comprenant :
la machine de travail comportant un outil de travail (3) comportant un godet (6) ;
un dispositif de commande (130) agencé séparément de la machine de travail ; et
une unité de réception d'entrée (45) qui reçoit une entrée de démarrage de pesage pour démarrer le pesage d'une charge dans le godet (6) ; dans lequel lorsque l'unité de réception d'entrée (45) reçoit l'entrée de démarrage de pesage, le dispositif de commande (30) détermine si une condition de démarrage de pesage automatique est satisfaite ou non, la condition de démarrage de pesage automatique comportant une condition selon laquelle l'outil de travail (3) n'effectue pas un travail d'excavation, et, lorsque la condition de démarrage de pesage automatique est satisfaite, le dispositif de commande (30) commande un fonctionnement de l'outil de travail (3) pour peser la charge dans le godet (6) ;
l'outil de travail (3) comporte une flèche (14) qui soulève et abaisse le godet (6), et un vérin de flèche (16) qui entraîne la flèche (14) ;
la machine de travail comprend en outre : un corps de véhicule (2, 5) auquel l'outil de travail (3) est fixé ; une unité de détection d'angle de flèche (29) qui détecte un angle de la flèche (14) par rapport au corps de véhicule (2, 5) ; une unité de détection d'angle de godet (48) qui détecte un angle du godet (6) par rapport à la flèche (14) ; et une unité de détection de pression de vérin (28a, 28b) qui détecte une pression de vérin du vérin de flèche (16) ; et
la condition de démarrage de pesage automatique comporte une condition selon laquelle aucune défaillance ne se produit dans chacune de l'unité de détection d'angle de flèche (29), de l'unité de détection d'angle de godet (48) et de l'unité de détection de pression de vérin (28a, 28b).
